# EUROPÄISCHE PATENTSCHRIFT

(11) **EP 1 094 154 B1**
(45) Veröffentlichungstag und Bekanntmachung des Hinweises auf die Patenterteilung: **29.09.2004**
(21) Anmeldenummer: 00115933.4
(22) Anmeldetag: 25.07.2000
(51) Int. Cl.: D21G 1/02

(54) **Elastische Walze**
Soft roll
Rouleau élastique

(30) Priorität: 22.10.1999 DE 19951038
(43) Veröffentlichungstag der Anmeldung: 25.04.2001
(73) Patentinhaber: Voith Paper Patent GmbH, 89522 Heidenheim (DE)
(72) Erfinder: Sohl, Carsten, 7000 Fredericia (DK)
(74) Vertreter: Manitz, Finsterwald & Partner GbR

(56) Entgegenhaltungen:
- EP-A- 1 041 198
- WO-A-98/54405
- DE-A- 3 029 288
- DE-C- 19 547 164

## Beschreibung

Die vorliegende Erfindung betrifft eine Walze, insbesondere zum Glätten von Papierbahnen, mit einem insbesondere aus Metall bestehenden harten Walzenkern, der an seiner Außenseite mit einer elastischen Bezugsschicht versehen ist, wobei diese Bezugsschicht eine radial außenliegende Funktionsschicht und eine radial innenliegende Verbindungsschicht zum Verbinden der Funktionsschicht mit dem Walzenkern umfaßt.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittlichen Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Um eine hohe Lebensdauer der elastischen Walzen zu erreichen, muß gewährleistet sein, daß die Bezugsschicht zum einen weder durch die im Betrieb entstehende Eigenerwärmung noch durch im Betrieb auftretende, große lokale mechanische Überlastungen zerstört wird.

Dokument EP-A-1041198, das unter Artikel 54(3) EPÜ fällt, beschreibt eine Walze, insbesondere zum Glätten von Papierbahnen, mit einem aus Metall bestehenden harten Walzenkern, der an seiner Außenseite mit einer elastischen Bezugsschicht versehen ist, wobei diese Bezugsschicht eine radial außenliegende Funktionsschicht und eine radial innenliegende Verbindungsschicht zum Verbinden der Funktionsschicht mit dem Walzenkern umfaßt, wobei die innenliegende Verbindungsschicht und die außenliegende Funktionsschicht jeweils ein weiches Matrixmaterial mit darin eingebetteten Fasern umfassen.

Es ist eine Aufgabe der Erfindung eine Walze der eingangs genannten Art so auszubilden, daß die Gefahr des Auftretens von Hot-Spots verringert wird und auch hohe lokale Überlastungen nicht zu einer Zerstörung der elastischen Bezugsschicht führen.

Ausgehend von einer Walze der eingangs genannten Art wird diese Aufgabe dadurch gelöst, daß die innenliegende Verbindungsschicht und die außenliegende Funktionsschicht jeweils ein weiches Matrixmaterial mit darin eingebetteten Fasern umfassen, wobei das Matrixmaterial der Funktionsschicht ein hoch elastisches Material mit einem Dämpfungsfaktor von tan δ < 0,02 und das Matrixmaterial der Verbindungsschicht ein stark dämpfendes Material mit einem Dämpfungsfaktor von tan δ > 0,05 ist. Der Dämpfungsfaktor tan δ ist dabei durch die Gleichung tan δ = E'/E'' definiert, wobei E den Elastizitätsmodul mit seinem Realteil E' und seinem Imaginärteil E'' darstellt.

Erfindungsgemäß wird somit die gestellte Aufgabe durch eine Aufteilung der Bezugsschicht in zwei für ihre jeweilige Aufgabe optimierte Teilschichten gelöst. Während durch das stark dämpfende Matrixmaterial in der Verbindungsschicht die lokalen Überlastungen aufgenommen und ge-dämpft werden, so daß die elastische Walze gegenüber hohen lokalen Überlastungen relativ unempfindlich ist, wird durch das hoch elastische Matrixmaterial der Funktionsschicht zum einen die erforderliche Flexibilität der Walzenoberfläche für ein hochwertiges Satinage-Ergebnis sowie eine geringe Eigenerwärmung der außenliegenden Bereiche der Bezugsschicht gewährleistet.

Das Matrixmaterial besteht bevorzugt aus einem Kunststoffmaterial, insbesondere einem Duroplast oder einem Thermoplast. Dabei wird darauf hingewiesen, daß der im Zusammenhang mit dem Matrixmaterial verwendete Begriff "weich" lediglich in Relation zu der als hart bezeichneten Aussenseite der Metall-, insbesondere Stahlwalze zu verstehen ist.

Durch die in das Matrixmaterial der Verbindungsschicht eingebetteten Fasern wird zum einen die Wärmeableitung innerhalb der Verbindungsschicht erhöht und zum anderen die gewünschte Steifigkeit der Verbindungsschicht erreicht. Gleiches gilt für die in der Funktionsschicht eingebetteten Fasern, wobei hier die aufgrund des hoch elastischen Matrixmaterials nur in geringerem Maße auftretende Wärme im wesentlichen vollständig über die Fasern abgeleitet werden kann.

Nach einer vorteilhaften Ausführungsform der Erfindung beträgt der Fasergehalt der Verbindungsschicht ca. 40 bis 70 Vol.-%, insbesondere ca. 50 bis 60 Vol.-%. Der Fasergehalt der Funktionsschicht beträgt hingegen vorteilhaft ca. 5 bis 30 Vol.-%, insbesondere ca. 8 bis 20 Vol.-%.

Die Verbindungsschicht besitzt somit einen höhere Faseranteil als die Funktionsschicht, da die Verbindungsschicht zum einen eine höhere Steifigkeit besitzen soll als die Funktionsschicht und zum anderen in der radial innenliegenden Verbindungsschicht eine höhere Wärmeableitung erforderlich ist.

Bevorzugt besitzt die Verbindungsschicht eine größere radiale Dicke als die Funktionsschicht, wobei die radiale Dicke der Verbindungsschicht vorteilhaft ca. 30 bis 70 %, insbesondere ca. 50 % größer ist als die radiale Dicke der Funktionsschicht. Geeignete Werte für die radiale Dicke der Verbindungsschicht können dabei ca. 8 bis 15 mm, bevorzugt ca. 12 mm, und für die radiale Dicke der Funktionsschicht ca. 5 bis 12 mm, bevorzugt ca. 8 mm betragen.

Durch die größere radiale Dicke der Verbindungsschicht wird deren gewünschte Eigenschaft hinsichtlich einer hohen Aufnahmefähigkeit von großen lokalen Überlastungen verbessert, da diese von der relativ dicken Verbindungsschicht stark gedämpft werden.

Nach einer weiteren bevorzugten Ausführungsform der Erfindung besitzen die Fasern der Funktionsschicht und/oder der Verbindungsschicht eine höhere Wärmeleitfähigkeit als das Matrixmaterial, in das sie eingebettet sind. Insbesondere können die Fasern der Funktionsschicht und/oder der Verbindungsschicht dabei als Kohlefasern und/oder als Metallfasern ausgebildet sein.

Dadurch wird erreicht, daß die an Überhitzungsstellen innerhalb der Funktionsschicht und/oder der Verbindungsschicht auftretende Wärme schnell und sicher abgeleitet wird, bevor die entstehende Hitze zu einer Zerstörung der Bezugsschicht führen kann.

Vorteilhaft sind in der Funktionsschicht und/oder Verbindungsschicht zusätzlich zu den Fasern weitere Füllstoffe vorhanden, deren Wärmeleitfähigkeit insbesondere ebenfalls größer ist als die Wärmeleitfähigkeit des jeweiligen Matrixmaterials. Die Füllstoffe können dabei beispielsweise aus Kohlenstoff und/oder aus Metall, bevorzugt in Pulver- bzw. Faserform bestehen.

Durch diese Füllstoffe wird eine weitere Verbesserung der Wärmeleitfähigkeit des jeweiligen Matrixmaterials erreicht.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnung näher beschrieben; in dieser zeigt:
- Fig. 1: einen Teillängsschnitt durch eine erfindungsgemäß ausgebildete Walze mit elastischer Bezugsschicht und
- Fig. 2: eine weitere Ausführungsform einer erfindungsgemäß ausgebildeten Walze im Teillängsschnitt.

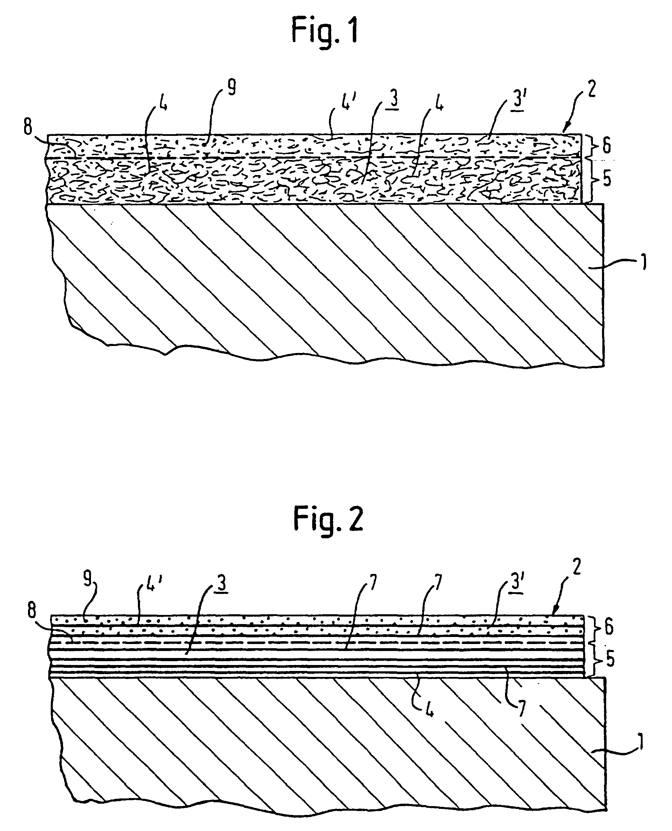

Fig. 1 zeigt einen Teil eines in Längsrichtung geschnittenen, beispielsweise aus Stahl oder Hartguß bestehenden Walzenkerns 1, der an seiner Aussenseite mit einer ebenfalls geschnitten dargestellten elastischen Bezugsschicht 2 versehen ist.

Die Bezugsschicht 2 umfaßt eine radial innen gelegene Verbindungsschicht 5 sowie eine sich daran anschließende, radial außen gelegene Funktionsschicht 6, die in Fig. 1 zur besseren Verdeutlichung durch eine gestrichelte Linie 8 voneinander getrennt sind, wobei die Verbindungsschicht 5 eine größere radiale Dicke besitzt als die Funktionsschicht 6.

Die Verbindungsschicht 5 besteht aus einem stark dämpfenden Matrixmaterial 3, insbesondere einer Harz-Härter-Kombination, in die eine Vielzahl von Fasern 4 eingebettet sind. Bei den Fasern 4 kann es sich dabei beispielsweise um Kohlefasern, um Metallfasern oder um eine Mischung aus Kohle- und Metallfasern handeln. Grundsätzlich muß das Fasermaterial geeignet sein, die Wärmeleitfähigkeit sowie die Steifigkeit der Verbindungsschicht 5 gegenüber einer aus reinem Matrixmaterial 3 bestehenden Schicht zu erhöhen.

In ähnlicher Weise besteht die Funktionsschicht 6 aus einem elastischen Matrixmaterial 3', in das eine Vielzahl von Fasern 4' eingebettet sind, für die die gleichen Materialbedingungen wie für die Fasern 4 gelten. Zusätzlich sind in dem Matrixmaterial 3' Füllstoffe 9 eingebettet, die ebenfalls der Verbesserung der Wärmeleitfähigkeit der Funktionsschicht 6 dienen. Dabei können diese Füllstoffe pulverförmig sowie beispielsweise als mineralische oder metallische Füllstoffe ausgebildet sein.

Das Matrixmaterial 3' der Funktionsschicht 6 besitzt eine deutlich höhere Elastizität als das Matrixmaterial 3 der Verbindungsschicht 5, so daß die Bezugsschicht 2 in ihrem radial äußeren Bereich zum einen die für die Satinage erforderliche Flexibilität besitzt und zum anderen in diesem Bereich eine möglichst geringe Eigenerwärmung stattfindet.

Wie der Fig. 1 ebenfalls zu entnehmen ist, besitzt die Funktionsschicht 6 einen geringeren Fasergehalt als die Verbindungsschicht 5. Dadurch wird erreicht, daß die Funktionsschicht 2 ihre auch durch das hoch elastische Matrixmaterial 3' bedingte Elastizität in ausreichender Weise erhält, während die Verbindungsschicht 5 durch den hohen Fasergehalt eine hohe Steifigkeit besitzt und zusammen mit dem hoch dämpfenden Matrixmaterial 3 große lokale mechanische Überlastungen aufnehmen und dämpfen kann.

Bei der in Fig. 2 dargestellten Ausführungsform sind die Fasern 4 innerhalb der Bezugsschicht 2 als im wesentlichen konzentrisch oder spiralförmig zum Walzenkern 1 verlaufenden Faserlagen 7 schematisch dargestellt.

Die Faserlagen 7 können dabei beispielsweise durch Wickeln von Faserrovings auf den Walzenkern 1 erzeugt werden, wobei zur Bildung der Bezugsschicht 2 mehrere Wickelvorgänge durchgeführt werden können, um mehrere Faserlagen 7 zu erzeugen. Auch in diesem Fall ist der Fasergehalt der Verbindungsschicht 5 höher als der Fasergehalt der Funktionsschicht 6 und es sind in der Funktionsschicht 6 wiederum weitere Füllstoffe 9 zur Verbesserung der Wärmeleitfähigkeit der Funktionsschicht 6 vorgesehen.

Die Fasern bzw. Faserrovings können vor dem Wickeln mit sich im flüssigen Zustand befindenden Matrixmaterial beaufschlagt werden, indem sie beispielsweise durch ein Matrixbad gezogen werden. Es ist jedoch auch möglich, daß die Fasern bzw. die Faserrovings trocken auf den Walzenkern 1 gewickelt werden und während oder nach dem Aufwickeln mit Matrixmaterial durchtränkt werden, bis sie vollständig von diesem umgeben sind.

Es ist auch möglich, daß die Faserlagen 7 durch Wickeln eines Faservlieses erzeugt werden, wobei dies bevorzugt für die innerhalb der Funktionsschicht 6 angeordneten Faserlagen 7 gilt. In einem Faservlies sind die Fasern üblicherweise ungleichmäßig verteilt und kürzer als es beim Wickeln von Faserrovings der Fall ist. Bei der Verwendung eines Faservlieses besitzt somit die Funktionsschicht 6 eine höhere Flexibilität, als es bei der Verwendung von Faserrovings der Fall ist.

Während in der Fig. 2 aus Darstellungsgründen nur relativ wenige Faserlagen 7 eingezeichnet sind, kann die Bezugsschicht 2 tatsächlich beispielsweise zwischen 10 und 90, bevorzugt zwischen 40 und 50 Faserlagen 7 enthalten.

### Bezugszeichenliste

- 1: Walzenkern
- 2: elastische Bezugsschicht
- 3, 3': Matrixmaterial
- 4, 4': Fasern
- 5: Verbindungsschicht
- 6: Funktionsschicht
- 7: Faserlagen
- 8: gestrichelte Linie
- 9: Füllstoffe

## Patentansprüche

1. Walze, insbesondere zum Glätten von Papierbahnen, mit einem, insbesondere aus Metall bestehenden, harten Walzenkern (1), der an seiner Außenseite mit einer elastischen Bezugsschicht (2) versehen ist, wobei diese Bezugsschicht (2) eine radial außenliegende Funktionsschicht (6) und eine radial innenliegende Verbindungsschicht (5) zum Verbinden der Funktionsschicht (6) mit dem Walzenkern (1) umfaßt, wobei
die innenliegende Verbindungsschicht (5) und die außenliegende Funktionsschicht (6) jeweils ein weiches Matrixmaterial (3, 3') mit darin eingebetteten Fasern (4, 4') umfassen, wobei das Matrixmaterial (3') der Funktionsschicht (6) ein hoch elastisches Material mit einem Dämpfungsfaktor von tan δ < 0,02 und das Matrixmaterial (3) der Verbindungsschicht (5) ein stark dämpfendes Material mit einem Dämpfungsfaktor von tan δ > 0,05 ist, wobei der Dämpfungsfaktor durch die Gleichung tan δ = E'/E" definiert ist und E den Elastizitätsmodul mit seinem Realteil E' und seinem Imaginärteil E" darstellt.

2. Walze nach Anspruch 1,
**dadurch gekennzeichnet,**
**daß** das Matrixmaterial (3, 3') der Funktionsschicht (6) und/oder der Verbindungsschicht (5) ein Kunststoff, insbesondere ein Duroplast oder ein Thermoplast ist.

3. Walze nach Anspruch 1 oder 2,
**dadurch gekennzeichnet,**
**daß** das Matrixmaterial (3, 3') der Funktionsschicht (6) uns/oder der Verbindungsschicht (5) eine Harz/Härter-Kombination ist.

4. Walze nach einem der vorhergehenden Ansprüche,
**dadurch gekennzeichnet,**
**daß** der Fasergehalt der Verbindungsschicht (5) ca. 40 bis 70 Vol.-%, insbesondere ca. 50 bis 60 Vol.-% beträgt und/oder daß der Fasergehalt der Funktionsschicht (6) ca. 5 bis 30 Vol.-%, insbesondere ca. 8 bis 20 Vol.-% beträgt.

5. Walze nach einem der vorhergehenden Ansprüche,
**dadurch gekennzeichnet,**
**daß** die Verbindungsschicht (5) eine größerer radiale Dicke besitzt als die Funktionsschicht (6), insbesondere daß die radiale Dicke der Verbindungsschicht (5) ca. 30 bis 70 %, bevorzugt ca. 50 % größer ist als die radiale Dicke der Funktionsschicht (6).

6. Walze nach einem der vorhergehenden Ansprüche,
**dadurch gekennzeichnet,**
**daß** die radiale Dicke der Verbindungsschicht (5) ca. 8 bis 15 mm, bevorzugt ca. 12 mm beträgt und/oder
**daß** die radiale Dicke der Funktionsschicht (6) ca. 5 bis 12 mm, bevorzugt ca. 8 mm beträgt.

7. Walze nach einem der vorhergehenden Ansprüche,
**dadurch gekennzeichnet,**
**daß** die Fasern der Funktionsschicht (6) und/oder der Verbindungsschicht (5) eine höhere Wärmeleitfähigkeit besitzen als das Matrixmaterial (3, 3'), in das sie eingebettet sind.

8. Walze nach einem der vorhergehenden Ansprüche,
**dadurch gekennzeichnet,**
**daß** die Fasern (4, 4') der Funktionsschicht (6) und/oder der Verbindungsschicht (5) als Kohlefasern und/oder als Metallfasern ausgebildet sind.

9. Walze nach einem der vorhergehenden Ansprüche,
**dadurch gekennzeichnet,**
**daß** in der Funktionsschicht (6) und/oder in der Verbindungsschicht (5) zusätzlich zu den Fasern (4, 4') weitere Füllstoffe (9) vorhanden sind.

10. Walze nach Anspruch 9,
**dadurch gekennzeichnet,**
**daß** die Wärmeleitfähigkeit der Füllstoffe (9) größer ist als die Wärmeleitfähigkeit des Matrixmaterials (3, 3'), insbesondere daß die Füllstoffe (9) aus Kohlenstoff und/oder aus Metall bestehen.

## Claims

1. A roll, in particular for the smoothing of paper webs, having a hard roll core (1), which in particular consists of metal and which is provided with a resilient covering layer (2) at its outer side, with this covering layer (2) including a radially outwardly lying functional layer (6) and a radially inwardly lying connection layer (5) to connect the functional layer (6) to the roll core (1), wherein
the inwardly lying connection layer (5) and the outwardly lying functional layer (6) each include a soft matrix material (3, 3') with fibres (4, 4') embedded therein, with the matrix material (3') of the functional layer (6) being a highly resilient material with a damping factor of tan δ < 0.02 and the matrix material (3) of the connection layer (5) being a highly damping material with a damping factor of tan δ > 0.05, with the damping factor being defined by the equation tan δ = E'/E" and E representing the modulus of elasticity with its real portion E' and its imaginary portion E".

2. A roll in accordance with claim 1, **characterised in that** the matrix material (3, 3') of the functional layer (6) and/or of the connection layer (5) is a plastic, in particular a thermosetting plastic or a thermoplastic.

3. A roll in accordance with claim 1 or claim 2, **characterised in that** the matrix material (3, 3') of the functional layer (6) and/or of the connection layer (5) is a resin/hardener combination.

4. A roll in accordance with any one of the preceding claims, **characterised in that** the fibre content of the connection layer (5) amounts to approximately 40 to 70% by volume, in particular to approximately 50 to 60% by volume; and/or **in that** the fibre content of the functional layer (6) amounts to approximately 5 to 30% by volume, in particular to approximately 8 to 20% by volume.

5. A roll in accordance with any one of the preceding claims, **characterised in that** the connection layer (5) has a larger radial thickness than the functional layer (6); in particular **in that** the radial thickness of the connection layer (5) is approximately 30 to 70% larger, preferably approximately 50% larger, than the radial thickness of the functional layer (6).

6. A roll in accordance with any one of the preceding claims, **characterised in that** the radial thickness of the connection layer (5) amounts to approximately 8 to 15 mm, preferably to approximately 12 mm; and/or **in that** the radial thickness of the functional layer (6) amounts to approximately 5 to 12 mm, preferably to approximately 8 mm.

7. A roll in accordance with any one of the preceding claims, **characterised in that** the fibres of the functional layer (6) and/or of the connection layer (5) have a higher thermal conductivity than the matrix material (3, 3') into which they are embedded.

8. A roll in accordance with any one of the preceding claims, **characterised in that** the fibres (4, 4') of the functional layer (6) and/or of the connection layer (5) are made as carbon fibres and/or as metal fibres.

9. A roll in accordance with any one of the preceding claims, **characterised in that** further fillers (9) are present in the functional layer (6) and/or in the connection layer (5) in addition to the fibres (4, 4').

10. A roll in accordance with claim 9, **characterised in that** the thermal conductivity of the fillers (9) is larger than the thermal conductivity of the matrix material (3, 3'); in particular **in that** the fillers (9) consist of carbon and/or of metal.

## Revendications

1. Rouleau destiné notamment au lissage de bandes de papier, comportant un noyau de rouleau dur (1) constitué notamment de métal, dont la face extérieure est munie d'une couche de revêtement élastique (2), cette couche de revêtement (2) comportant une couche de fonction (6) située radialement à l'extérieur, et une couche de liaison (5) située radialement à l'intérieur destinée à relier la couche de fonction (6) au noyau de rouleau (1), la couche de liaison (5) située radialement à l'intérieur, et la couche de fonction (6) située radialement à l'extérieur, comportant chacune un matériau de matrice souple (3, 3') dans lequel sont enrobées des fibres (4, 4'), le matériau de matrice (3') de la couche de fonction (6) étant un matériau hautement élastique d'un indice d'amortissement de tan δ < 0,02, et le matériau de matrice (3) de la couche de liaison (5) étant un matériau fortement amortissant d'un indice d'amortissement de tan δ < 0,05, l'indice d'amortissement étant défini par l'équation tan δ = E' / E", et E étant le module d'élasticité avec sa partie réelle E' et sa partie imaginaire E".

2. Rouleau selon la revendication 1,
**caractérisé en ce que**
le matériau de matrice (3, 3') de la couche de fonction (6) et/ou de la couche de liaison (5) est une matière plastique, notamment une résine thermodurcissable ou une matière thermoplastique.

3. Rouleau selon la revendication 1 ou 2,
**caractérisé en ce que**
le matériau de matrice (3, 3') de la couche de fonction (6) et/ou de la couche de liaison (5) est une combinaison de résine / durcisseur.

4. Rouleau selon l'une quelconque des revendications précédentes,
**caractérisé en ce que**
la teneur en fibres de la couche de liaison (5) est de l'ordre de 40 à 70 % en volume, notamment de l'ordre de 50 à 60 % en volume, et/ou
**en ce que** la teneur en fibres de la couche de fonction (6) est de l'ordre de 5 à 30 % en volume, notamment de l'ordre de 8 à 20 % en volume.

5. Rouleau selon l'une quelconque des revendications précédentes,
**caractérisé en ce que**
l'épaisseur radiale de la couche de liaison (5) est plus importante que celle de la couche de fonction (6), notamment **en ce que** l'épaisseur radiale de la couche de liaison (5) est d'environ 30 à 70 %, de préférence d'environ 50 %, supérieure à l'épaisseur radiale de la couche de fonction (6).

6. Rouleau selon l'une quelconque des revendications précédentes,
**caractérisé en ce que**
l'épaisseur radiale de la couche de liaison (5) est de l'ordre de 8 à 15 mm, de préférence de l'ordre de 12 mm, et/ou
**en ce que** l'épaisseur radiale de la couche de fonction (6) est de l'ordre de 5 à 12 mm, de préférence de l'ordre de 8 mm.

7. Rouleau selon l'une quelconque des revendications précédentes,
**caractérisé en ce que**
les fibres de la couche de fonction (6) et/ou de la couche de liaison (5) ont une conductibilité thermique plus élevée que le matériau de matrice (3, 3') dans lequel elles sont enrobées.

8. Rouleau selon l'une quelconque des revendications précédentes,
**caractérisé en ce que**
les fibres (4, 4') de la couche de fonction (6) et/ou de la couche de liaison (5) sont des fibres de carbone et/ou des fibres de métal.

9. Rouleau selon l'une quelconque des revendications précédentes,
**caractérisé en ce que**,
en plus des fibres (4, 4'), d'autres matières de charge (9) sont contenues dans la couche de fonction (6) et/ou la couche de liaison (5).

10. Rouleau selon la revendication 9,
**caractérisé en ce que**
la conductibilité thermique des matières de charge (9) est plus importante que la conductibilité thermique du matériau de matrice (3, 3'), notamment **en ce que** les matières de charge (9) sont en carbone et/ou en métal.
